Europäisches Patentamt

European Patent Office

Office européen des brevets

(11) Veröffentlichungsnummer : **0 347 808 B1**

(12) # EUROPÄISCHE PATENTSCHRIFT

(45) Veröffentlichungstag der Patentschrift :
26.08.92 Patentblatt 92/35

(51) Int. Cl.$^5$ : **C02F 11/10, C04B 7/24**

(21) Anmeldenummer : **89111125.4**

(22) Anmeldetag : **19.06.89**

(54) **Verfahren zur Behandlung von Klärschlamm.**

(30) Priorität : **21.06.88 EP 88109870**

(43) Veröffentlichungstag der Anmeldung :
**27.12.89 Patentblatt 89/52**

(45) Bekanntmachung des Hinweises auf die
Patenterteilung :
**26.08.92 Patentblatt 92/35**

(84) Benannte Vertragsstaaten :
**AT BE CH DE ES FR GB GR IT LI LU NL SE**

(56) Entgegenhaltungen :
**EP-A- 0 302 310**
**WO-A-88/02284**
**DE-A- 3 533 775**
**FR-A- 586 506**

(56) Entgegenhaltungen :
**CHEMICAL ABSTRACTS, Band 109, Nr. 26, 26.
Dezember 1988, Seite 339, Zusammenfassung
Nr. 236284r, Columbus, Ohio, US; M.-D. HOet
al.: "Field testing and computer modeling of
an oxygen combustion system at the EPA
mobile incinerator", & JAPCA 1988,38(9),
1185-91**

(73) Patentinhaber : **Aicher, Max, Dipl.-Ing.**
**Teisenbergstrasse 7**
**W-8228 Freilassing (DE)**

(72) Erfinder : **Aicher, Max, Dipl.-Ing.**
**Teisenbergstrasse 7**
**W-8228 Freilassing (DE)**

(74) Vertreter : **Patentanwälte Dipl.-Ing. F.W. Möll**
**Dipl.-Ing. H.Ch. Bitterich**
**Langstrasse 5 Postfach 2080**
**W-6740 Landau/Pfalz (DE)**

## Beschreibung

Die Erfindung bezieht sich auf ein Verfahren zur Behandlung von Klärschlamm.

Klärschlamm ist ein nicht vermeidbares Produkt der biologischen Abwasserreinigung; seine Beseitigung ist mit zunehmender Problematik behaftet. Klärschlamm enthält je nach Behandlung und Zusammensetzung des Abwassers neben dem hauptsächlich aus Biomasse bakteriellen Ursprungs bestehenden organischen Anteil zwischen 20 bis 60 %, im Mittel etwa 50 % anorganische Bestandteile. Im Gegensatz zu pflanzlicher Biomasse kommen in Klärschlamm kaum Lipine und nur geringe Mengen Kohlehydrate, dafür aber als Hauptkomponenten Lipide und Proteine vor.

Die in der Bundesrepublik Deutschland jährlich anfallende Menge an flüssigem Klärschlamm aus Haushalten und Industrie erhöht sich laufend; sie betrug z.B. im Jahr 1986 etwa 50 Millionen cbm mit etwa 4, 6 % Trockenmassegehalt. Von dieser Gesamtmenge kann nur etwa ein Drittel genutzt, d.h. entweder unmittelbar oder nach Kompostierung auf landwirtschaftlich genutzte Flächen aufgebracht werden; der größte Teil des Klärschlammaufkommens wird als Abfall behandelt, wobei etwa 60 % unmittelbar deponiert und etwa 7 % thermisch behandelt und die Reststoffe deponiert werden.

Abgesehen davon, daß das jährliche Aufkommen an Klärschlamm weiter zunehmen wird, weil weitere Teile der Bevölkerung an öffentliche Kläranlagensysteme angeschlossen werden und weil der geforderte Qualitätsgrad der Abwasserreinigung steigen wird, ist keine dieser Behandlungsarten unproblematisch. Dazu kommt, daß wegen der begrenzten Kapazität und der relativen Zunahme von Schadstoffen im Klärschlamm der landwirtschaftlich verwertbare Anteil am Gesamtaufkommen absolut und relativ zurückgehen wird.

Beim Recycling von Klärschlamm sind die Qualitätsanforderungen sehr hoch, vor allem im Hinblick auf Seuchenhygiene und chemische Inhaltsstoffe. Zur Aufbringung auf landwirtschaftlich genutzte Flächen muß Klärschlamm entseucht werden; das ist nur bei langer Einwirkzeit und/oder hoher Temperatur in einem biologischen, physikalischen oder chemischen Prozeß zu erreichen, nicht aber durch die übliche Klärschlammfaulung. Zudem hat Klärschlamm nicht nur einen relativ hohen Gehalt an giftigen Schwermetallen, sondern auch an Dioxin, so daß er nicht ohne weiteres als landwirtschaftlicher Dünger verwertet werden kann.

Deponiert werden im wesentlichen mechanisch entwässerte Klärschlämme und Reststoffe nach der Verbrennung. Abgesehen davon, daß Flächen für Deponien in Zukunft in immer geringerem Maße zur Verfügung stehen werden, ist auch die Praxis der Deponierung fragwürdig, da die Schlämme unter Berücksichtigung bodenmechanischer Kriterien oft nicht deponierfähig sind.

Daneben gibt es verschiedene Ansätze, die im Klärschlamm enthaltene organische Materie als Energieträger zu nutzen. Die anaerobe Faulung, die ein Methan-Kohlensäure-Gas mit etwas über 50 % $CH_4$-Gehalt erzeugt, ist der am häufigsten geübte Prozeß. Hierbei werden allerdings nur etwa 25 bis 50 % der organischen Bestandteile umgesetzt. Die Verbrennung von Klärschlamm ist problematisch, vor allem wenn der Schlamm flüchtige Metalle enthält, wie z.B. Hg, Cd und Zn. Bei Temperaturen über 500 Grad C ist auch die Bildung von Dioxinen zu befürchten. Gefährlich bei Hochtemperaturpyrolysen ist auch der hohe Anteil an toxischem Acetonitril in den Reaktionswässern sowie an cancerogenen Aromaten. Nachteilig bei der Verbrennung wirkt sich auch der vergleichsweise große Anteil an anorganischen Bestandteilen aus, der unnötigerweise aufgeheizt werden muß und sich in den Staubfiltern der Verbrennungsanlagen sammelt.

Diese Gefahren werden vermieden bei der sogenannten Niedertemperatur-Konvertierung, bei der vorgetrockneter und rieselfähig, z.B. granulat- oder pulverförmig aufbereiteter Klärschlamm einer Wärmebehandlung bei etwa 250 bis 330 Grad C unter anaeroben Bedingungen unterzogen wird (DE-A 32 21 495). Dabei entstehen analog der Bildung von Erdöl und Kohle in der Natur aus den Lipiden und Proteinen Öle mit einem verhältnismäßig hohen Kohlenstoffanteil und hoher Verbrennungswärme, daneben Kohle, die ihrerseits wieder verbrannt werden kann. Die dabei anfallenden Verbrennungs- oder Rauchgase erreichen Temperaturen von etwa 550 bis 600 Grad C; sie können als Heizmedium bei der Konvertierung verwendet werden. Die im Klärschlamm enthaltenen giftigen Schwermetalle verbleiben, soweit sie nicht in Gasform entwichen sind, in der Asche und müssen deponiert werden. Damit wird zwar - neben der Energiegewinnung - gegenüber dem ursprünglichen Schlammaufkommen eine wesentliche Verringerung der zu deponierenden Menge erzielt; nichtsdestoweniger bleibt die Notwendigkeit der Deponierung und das damit verbundene Risiko der in diesem Deponiegut noch enthaltenen Schadstoffe, insbesondere der Schwermetalle.

Es ist weiterhin bekannt, die nach einer solchen Niedertemperatur-Konvertierung erhaltenen Schlammrückstände, anstatt sie zu deponieren, in feinkörniger Form bei der Herstellung keramischer Formlinge in die Tonmasse einzumischen und diese dann in einem Tunnelofen zu brennen (DE-A 32 38 328). Durch die hohen Temperaturen in der Brennzone und die lange Verweildauer der Formlinge in dem Ofen sollen dabei die anorganischen schädlichen Bestandteile, insbesondere die Schwermetalle, in silikatische Form übergeführt und unlöslich werden. In eine ähnliche Richtung weist auch der Gedanke, diese Rückstände gegebenenfalls unter Zusatz von Zuschlägen zu brennen, um aus den verbleibenden anorganischen Bestandteilen hydraulischen Zement herzustellen (FR-A 586 506).

Schließlich ist es auch bekannt, den in Haus- und Industriemüll enthaltenen Heizwert, sei es in Form von Pyrolysegasen, sei es in Form fester Bestandteile, dort nutzbar zu machen, wo hohe Brenntemperaturen erreicht werden müssen, z.B. beim Brennen von Zementklinker (DE-A 35 33 775). Um auch größere Mengen von Abfall mit oft wechselnder Zusammensetzung in den Zementklinker einbinden zu können, ohne durch zu hohe Konzentrationen unerwünschter Bestandteile aus dem Müll die Klinkerqualität zu beeinträchtigen, sollen danach die Pyrolyserückstände vor der Eingabe in den Drehrohrofen homogenisiert und ein Teil der Ofengase aus demselben ausgeleitet werden. Dabei ist auch schon vorgeschlagen worden, für die Verbrennung im Drehrohrofen anstelle von Luft wenigstens zum Teil Sauerstoff zu verwenden.

Der nach der Niedertemperatur-Konvertierung in den Rückständen enthaltene Anteil von Kohlenstoff ist mit etwa 20 bis 30 % des Gesamtrückstandes sehr gering. Sein Heizwert bei Verbrennung in Luft entspricht etwa demjenigen von Braunkohle, er reicht nicht aus, um eine zum Sintern der mineralischen Bestandteile erforderliche Temperatur von mindestens 1.250 Grad C zu erreichen. Dies erfordert nicht nur die Zufuhr von Fremdenergie in Form von Kohle, Erdöl oder Erdgas, sondern bedeutet wegen der zusätzlichen Verbrennung weiterer kohlenstoffhaltiger Materie auch eine zusätzliche Oxydation von Sauerstoff aus der Luft. Da Sauerstoff in der Luft nur zu etwa 20 % enthalten ist, oxidiert zugleich auch der Stickstoff aus der Luft zu Stickoxiden. Diese belasten aber die Umwelt ähnlich wie das bei dieser Verbrennung ebenfalls entstehende Kohlendioxid.

Vor diesem Hintergrund liegt der Erfindung die Aufgabe zugrunde, bei Optimierung des Energiehaushaltes, nämlich unter Minimierung des Aufwandes an Fremdenergie und unter weitestgehender Schonung der Umwelt einen möglichst großen Anteil, wenn nicht die Gesamtheit des anfallenden Klärschlamms einschließlich seiner anorganischen Bestandteile einer Wiederverwendung im Sinne des Recycling zuzuführen.

Diese Aufgabe wird nach der Erfindung dadurch gelöst, daß der Klärschlamm zunächst auf einen Anteil an Trockensubstanz von mindestens 85 % getrocknet und sodann einer Niedertemperatur-Konvertierung unter anaeroben Bedingungen bei etwa 250 bis 350 Grad C zur Absonderung des organischen Kohlenstoffes in Form von Öl unterzogen wird, daß die danach verbleibenden Rückstände unter Zugabe von reinem Sauerstoff bei mindestens 1.250 Grad C gebrannt und daß schließlich die danach verbleibenden anorganischen Bestandteile in fein gemahlenem Zustand als Substitut für ein hydraulisches Bindemittel, insbesondere Zement, verwendet werden.

Die Niedertemperatur-Konvertierung erfolgt zweckmäßig bei etwa 300 Grad C und der Brand etwa bei 1.450 Grad C.

Das erfindungsgemäße Verfahren erlaubt bei weitestgehender Schonung der Umwelt ein vollständiges Recycling von Klärschlamm. Durch sinnvolle Ausnutzung des hohen Energiegehaltes von Klärschlamm ermöglicht die erfindungsgemäße Kombination von Verfahrensschritten trotz des hohen Energiebedarfs eine weitgehend energieautarke, d.h. von der Zufuhr äußerer Energie weitgehend unabhängige Betriebsweise.

In diesem Sinne wirkt einmal die Vortrocknung des Klärschlamms auf einen möglichst hohen Anteil an Trokkensubstanz, vorzugsweise 90 bis 100 %. Dadurch wird der Anteil des bei der anschließenden Niedertemperatur-Konvertierung mitzubehandelnden Ballastwassers minimiert.

Bei der anschließenden Niedertemperatur-Konvertierung des vorgetrockneten Klärschlammes unter anaeroben Bedingungen entstehen analog der Bildung von Erdöl und Kohle in der Natur Öle mit einem verhältnismäßig hohen Kohlenstoffanteil und hoher Verbrennungswärme. Gewaschen verbrennt dieses Öl weitgehend rückstandsfrei; es ist also als Brennstoff sehr gut geeignet. Das bei der Konvertierung weiterhin entstehende, hauptsächlich aus $CO_2$ bestehende Reaktionsgas kann als Schutzgas zur Aufrechterhaltung der anaeroben Verhältnisse zurückgeführt werden. Öl und Wasser treten bei der Konvertierung in die Gasphase über und können an mehreren Stellen oder als Gesamtfraktion abgezogen und in einem Kondensator abgeschieden werden. Schwermetallverbindungen können nicht über die Gasphase entweichen; sie verbleiben vielmehr in dem festen Rückstand, der neben den anorganischen Bestandteilen des Klärschlamms den neben dem Öl aus den organischen Bestandteilen gebildeten Kohlenstoff enthält.

Wesentlich für das erfindungsgemäße Verfahren ist nun die Verbrennung dieses Restkohlenstoffes unter Zufuhr von reinem Sauerstoff. Hierdurch wird nicht nur die für die Sinterung der anorganischen Bestandteile erforderliche Temperatur von mindestens 1.250 Grad C, vorzugsweise etwa 1.450 Grad C erreicht, sondern auch die Verbrennung zusätzlicher, nicht regenerierbarer Energieträger vermieden, die nicht nur das Entstehen von weiterem Kohlendioxid, sondern vor allem von Stickoxiden verursachen würde, welche die Umwelt wiederum stark belasten. Aus der Umsetzung des Restkohlenstoffes mit dem Sauerstoff entstehen zwar auch gewisse Mengen an Kohlendioxid; diese sind aber vergleichsweise gering, ebenso wie nitrose Gase, die sich aus dem im restlichen Kohlenstoff enthaltenen Stickstoff bilden.

Der für die Verbrennung verwendete reine Sauerstoff kann auf umweltschonende Weise insbesondere aus flüssiger Luft durch fraktionierte Destillation und Kondensation gewonnen werden. In diesem Zusammenhang lassen sich auch regenerierbare Energiequellen, wie z.B. Solarenergie und Wasserkraft einsetzen, die unter bestimmten klimatischen Voraussetzungen nahezu unbegrenzt zur Verfügung stehen.

Das erfindungsgemäße Verfahren der fraktionierten Pyrolyse von Klärschlamm und die Verwendung der verbleibenden anorganischen Bestandteile führt somit nicht nur zu einer vollständigen Nutzung der im Klärschlamm enthaltenen organischen Bestandteile im Hinblick auf ihre Energie, sondern auch dazu, daß die verbleibenden anorganischen Bestandteile nicht deponiert zu werden brauchen, sondern als Füllstoffe, nach dem Sintern sogar als hydraulisches Bindemittel wie Zement bei der Herstellung von Beton verwendet werden können. Die in erfindungsgemäßer Weise geführte fraktionierte Pyrolyse hat noch den besonderen Vorteil, daß die Schwermetalle während der Behandlung nicht ausgeschieden werden, sondern in der anorganischen Restmasse verbleiben, in der sie vor allem nach der Sinterung in Form von Oxiden vorliegen, also in einer ihrem natürlichen Vorkommen entsprechenden Form, so daß keine Gefahr mehr besteht, daß sie etwa durch Auswaschen wieder in den Lebenskreislauf gelangen.

Als praktisches Beispiel kann die Erfindung anhand des Klärschlammaufkommens einer Population von 100.000 Einwohnern erläutert werden, beispielsweise einer Stadt an der Grenze zur Großstadt. Eine solche hat derzeit ein Klärschlammaufkommen von etwa 30.000 t/Jahr. Um getrocknet zu werden, bedarf dieser flüssige Klärschlamm der mechanischen Vorentwässerung auf ca. 20 bis 30 % Trockensubstanz. Zur Trocknung können dann Bandtrockner verwendet werden, auf die der zu trocknende Klärschlamm in Würstchenform aufgelegt und einer Heißluftbehandlung bei Trockentemperaturen von 100 bis 130 Grad C ausgesetzt wird. Auf diese Weise lassen sich Trocknungsgrade von 50 bis 95 % Trockensubstanz erreichen. Bezogen auf die Ausgangsmenge beträgt die Trockensubstanzmenge etwa 1.500 t.

Der auf diese Weise getrocknete Klärschlamm wird dann einer Niedertemperatur-Konvertierung zugeführt, bei der etwa 300 t Öl abgesondert werden. Die verbleibende Rückstandsmenge von etwa 1.200 t wird dann unter Zugabe von reinem Sauerstoff bei etwa 1.450 Grad C gebrannt. Dabei verbrennen die Kohlerückstände und es bleiben etwa 750 t anorganischer Bestandteile zurück, die insgesamt etwa 50 % der Trockensubstanz ausmachen. Diese Menge entspricht etwa 12 % des ursprünglichen Klärschlammvolumens nach Vorentwässerung. Diese Menge kann entweder in Form von Granulat als Zuschlag oder in fein gemahlenem Zustand im Rahmen des in der Bauindustrie vorhandenen Zementverbrauchs ohne weiteres untergebracht werden.

Dabei wird die Eigenschaft dieser anorganischen Bestandteile ausgenützt, daß sie nach einem dem Brennen von Zementklinker entsprechenden Brennen in Drehrohr- oder Schachtöfen durch Sintern neue Verbindungen bilden, die zumindest latent hydraulische Eigenschaften aufweisen, ähnlich denjenigen von Hochofenschlacke und Flugasche. In Tabelle 1 ist die chemische Zusammensetzung der gebrannten anorganischen Bestandteile von Klärschlamm derjenigen von Portlandzement gegenübergestellt.

## Tabelle 1:

| Anteile in Gew.-% | Klärschlammsinter | Portlandzement |
|---|---|---|
| $CaO$ | 21,2 | 61 — 69 |
| $SiO_2$ | 46,1 | 18 — 24 |
| $Al_2O_3$ | 8,9 | 4 — 8 |
| $Fe_2O_3$ | 3,0 | 1 — 4 |
| $Mn_2O_3$ ($MnO$) | 0,1 | 0,0 — 0,5 |
| $MgO$ | 3,3 | 0,5 — 4,0 |
| $SO_3$ | 5,0 | 2,0 — 3,5 |

Durch Mischen mit Portlandzement können, ähnlich wie bei Hochofenschlacke, Werte erreicht werden, die etwa denen von Hochofenzement entsprechen. In Tabelle 2 sind Mischungsverhältnisse von 80 zu 20 %, 70 zu 30 % und 60 zu 40 % Portlandzement zu Klärschlammsinter den entsprechenden Werten von Hochofenzement gegenübergestellt.

**Tabelle 2:**

| Anteile in Gew.-% | Portlandzement/Klärschlammsinter | | | Hochofen-zement |
|---|---|---|---|---|
| | 80%/20% | 70%/30% | 60%/40% | |
| CaO | 56,2 | 51,2 | 46,9 | 43 - 60 |
| $SiO_2$ | 25,2 | 27,8 | 30,4 | 23 - 32 |
| $Al_2O_3$ | 5,8 | 6,2 | 6,6 | 6 - 14 |
| $Fe_2O_3$ | 2,6 | 2,6 | 2,7 | 0,5 - 3 |
| $Mn_2O_3$ (MnO) | 0,1 | 0,1 | 0,1 | 0,1 - 2,5 |
| MgO | 1,8 | 2,0 | 2,2 | 1,9 - 9,5 |
| $SO_3$ | 3,0 | 3,2 | 3,5 | 1,0 - 4,5 |

**Patentansprüche**

1. Verfahren zur Behandlung von Klärschlamm, bei dem der Klärschlamm zunächst vorgetrocknet, sodann einer Pyrolyse unterzogen und schließlich die Rückstände in einem Brennofen gebrannt werden, dadurch gekennzeichnet, daß der Klärschlamm auf einen Anteil an Trockensubstanz von mindestens 85 % getrocknet und sodann einer Niedertemperatur-Konvertierung unter anaeroben Bedingungen bei etwa 250 bis 350 Grad C zur Absonderung des organischen Kohlenstoffes in Form von Öl unterzogen wird, daß die danach verbleibenden Rückstände unter Zugabe von reinem Sauerstoff bei mindestens 1.250 Grad C gebrannt und schließlich die danach verbleibenden anorganischen Bestandteile in feingemahlenem Zustand als Substitut für ein hydraulisches Bindemittel, insbesondere Zement, verwendet werden.

2. Verfahren nach Anspruch 1, dadurch gekennzeichnet, daß die Niedertemperatur-Konvertierung bei etwa 300 Grad C erfolgt.

3. Verfahren nach Anspruch 1 oder 2, dadurch gekennzeichnet, daß die Rückstände bei etwa 1.450 Grad C gebrannt werden.

**Claims**

1. A method for the treatment of sewage sludge, in which the sewage sludge is firstly pre-dried, then undergoes pyrolysis and, finally, the residues are burnt in a furnace, characterised in that the sewage sludge is dried to a proportion of dry substance of at least 85 % and is then subjected to a low-temperature conversion under anaerobic conditions at approximately 250 to 350°C so as to separate the organic carbon in the form of oil, in that the remaining residues are burnt at at least 1,250°C while adding pure oxygen and, finally, the remaining inorganic constitutents are used in a finely ground state as a substitute for a hydraulic binding agent, in particular cement.

2. A method according to Claim 1, characterised in that the low-temperature conversion is carried out at approximately 300°C.

3. A method according to Claim 1 or 2, characterised in that the residues are burnt at approximately 1,450°C.


**Revendications**

1. Procédé pour le traitement de boue d'épuration, dans lequel la boue d'épuration est d'abord soumise à un préséchage, puis à une pyrolyse et enfin les résidus étant brûlés dans un four de combustion, caractérisé en ce que la boue d'épuration est séchée de façon à obtenir une proportion en substance sèche d'au moins 85 % et ensuite soumise à une conversion à basse température, dans des conditions anaérobies, à environ 250 à 350°C, en vue d'extraire le carbone organique sous forme d'huile, en ce que les résidus ayant subsisté sont brûlés, avec apport d'oxygène pur, à une température d'au moins 1250°C, et enfin les composants anorganiques subsistants étant utilisés, à l'état finement broyé, comme substitut pour un liant hydraulique, en particulier du ciment.

2. Procédé selon la revendication 1, caractérisé en ce que la conversion basse température s'effectue à environ 300°C.

3. Procédé selon la revendication 1 ou 2, caractérisé en ce que les résidus sont brûlés à environ 1450°C.